# EUROPÄISCHE PATENTSCHRIFT

(11) **EP 0 777 356 B1**
(45) Veröffentlichungstag und Bekanntmachung des Hinweises auf die Patenterteilung: **09.04.2008**
(21) Anmeldenummer: 96113231.3
(22) Anmeldetag: 19.08.1996
(51) Int. Cl.: H04L 9/32, H04L 9/08, H04M 15/00

(54) **Anordnung zur Übertragung von verschlüsselten Daten zwischen zwei unterschiedlichen Systemen**
Arrangement for encryptyed data transmission between two different systems
Dispositif pour la transmission de données cryptées entre deux systèmes différents

(30) Priorität: 01.12.1995 DE 29518896 U
(43) Veröffentlichungstag der Anmeldung: 04.06.1997
(73) Patentinhaber: Deutsche Telekom AG, 53113 Bonn (DE)
(72) Erfinder: Trabold, Johann, Dipl.-Ing., 64673 Zwingenberg (DE); Korst, Uwe, Dipl.-Ing., 64625 Bensheim (DE)

(56) Entgegenhaltungen:
- EP-A- 0 422 230
- FR-A- 2 681 165
- HAMMERSCHMITT J ET AL: "FROM TELEPHONE CARD TO CRYPTO CARD" COMPONENTS,DE,SIEMENS AKTIENGESELLSCHAFT. MUNCHEN, Bd. 27, Nr. 2, 1. März 1992 (1992-03-01), Seiten 9-12, XP000304364 ISSN: 0945-1137

## Beschreibung

Die Erfindung betrifft ein System mit wenigstens einer ersten und zweiten Datenstation, wobei wenigstens die erste Datenstation eine geheime Information speichert, gemäß dem Oberbegriff des Anspruchs 1.

Im Zeitalter der Informationstechnik werden immer mehr Daten zwischen elektronischen Datenverarbeitungsanlagen ausgetauscht, die meistens vertraulich sind und gegen das Mitlesen oder Verändern durch unbefugte Personen zu schützen sind. Es sind bisher viele kryptografische Techniken zur Verschlüsselung von Daten und zur Authentifizierung von Teilnehmern entwickelt worden. Diese kryptografischen Techniken sind allerdings immer auf ein bestimmtes System zugeschnitten und werden aus sicherheitstechnischen Gründen streng vertraulich behandelt. Weiterhin ist es erforderlich, daß beide Systeme den gleichen Schlüssel für den Datenaustausch kennen. Ein Nachteil ist darin zu sehen, daß das eine System entweder die vertrauliche Information im Klartext erhalten oder bei jeder Anwendung dieser vertraulichen Informationen eine Datenanfrage bei dem anderen System vornehmen muß.

Das Dokument EP-A-422 230 beschreibt einen kryptografischen Datenaustausch mit Schlüsselübertragung und gespeichertem, nichtauslesbaren Masterschlüssel.

Der Erfindung liegt daher die Aufgabe zugrunde, ein System bzw. eine Anlage mit wenigstens zwei verschiedenen Datenstationen zu schaffen, die den Austausch von vertraulichen Daten zwischen den verschiedenen Datenstationen vereinfacht.

Das technische Problem löst die Erfindung mit den Merkmalen des Anspruchs 1.

Vorteilhafte Ausgestaltungen sind in den Unteransprüchen angegeben.

Das erfindungsgemäße System oder die erfindungsgemäße Anlage zeichnet sich insbesondere dadurch aus, daß zwei verschiedene Datenstationen, beispielsweise die Datenstationen von zwei verschiedenen Netzbetreibern, vorgesehen sind. In die erste Datenstation ist eine Sicherheitseinrichtung einsetzbar, die einen kryptografischen Schlüssel enthält, der von keiner Datenstation auslesbar ist. Ebenso ist in die zweite Datenstation eine Sicherheitseinrichtung einsetzbar, die den gleichen Schlüssel wie die Sicherheitseinrichtung der ersten Datenstation enthält. Auch dieser Schlüssel kann von keiner Datenstation ausgelesen werden. Der kryptografische Schlüssel wird von einer unabhängigen Instanz, einer sogenannten Trusted Party erzeugt und in die Sicherheitseinrichtung der jeweiligen Datenstation eingeschrieben oder personalisiert, so daß keine der Datenstationen in den Besitz dieses kryptografischen Schlüssels gelangen kann. Damit die erste Datenstation wenigstens eine vorbestimmte geheime Information - z.B. einen nur ihr bekannten Schlüssel zur Überprüfung der Zugangsberechtigung eines Benutzers zur ersten Datenstationgesichert an die zweite Datenstation abgeben kann, übermittelt die erste Datenstation die geheime Information an ihre Sicherheitseinrichtung, die mit Hilfe des gespeicherten kryptografischen Schlüssels die geheime Information chiffriert und absendet. Die zweite Datenstation empfängt diese chiffrierte Information und überträgt sie zu ihrer Sicherheitseinrichtung, die mit Hilfe des gespeicherten kryptografischen Schlüssels die chiffrierte geheime Information der ersten Datenstation entschlüsselt. Die Sicherheitseinrichtung ist derart ausgebildet, daß die zweite Datenstation die entschlüsselte geheime Information der ersten Datenstation nicht auslesen kann. Eine zweckmäßige Weiterbildung sieht vor, daß neben der vorbestimmten geheimen Information weitere geheime Informationen, wie z. B. ein Systemschlüssel oder eine elektronische Unterschrift, in der ersten Datenstation gespeichert sind. Die Sicherheitseinrichtung der ersten Datenstation verschlüsselt diese geheimen Informationen mit der vorbestimmten geheimen Information und übermittellt die so verschlüsselten Informationen zur zweiten Datenstation. Die Sicherheitseinrichtung der zweiten Datenstation ist in der Lage, diese geheimen Informationen mit Hilfe der vorbestimmten geheimen Information zu entschlüsseln, die zuvor mit dem kryptografischen Schlüssel dechiffriert worden ist.

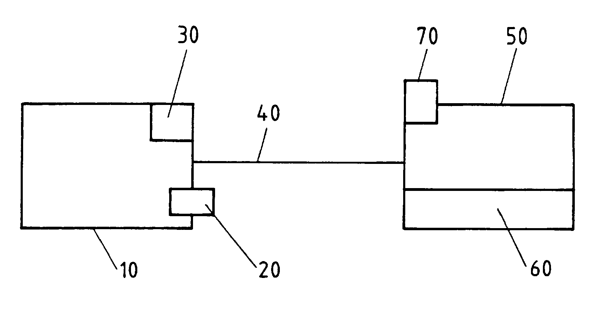

Die Erfindung wird nachstehend anhand eines Ausführungsbeispiels in Verbindung mit der beigefügten Zeichnung näher erläutert.

Die Figur zeigt eine erste Datenstation 10, in die eine erste Sicherheitseinrichtung 20 austauschbar eingesetzt ist. Bei der Sicherheitseinrichtung 20 kann es sich um einen sogenannten Kryptoadapter handeln. Ferner weist die Datenstation 10 eine Schnittstelle zum Anschalten eines Speichers 30 und eine Schnittstelle zum Anschalten an ein Telekommunikationsnetz 40 auf. Das in der Figur dargestellte Telekommunikationsnetz 40 kann ein beliebiges Übertragungsnetz, wie z.B. ein Funknetz oder ein drahtgebundenes Netz sein. Die Figur zeigt auch eine zweite Datenstation 50, in die eine Sicherheitseinrichtung 60 austauschbar eingesetzt ist. Bei der Sicherheitseinrichtung 60 kann es sich um ein hochleistungsfähiges Sicherheitsmodul handeln, dessen Funktionsweise im folgenden noch ausführlich beschrieben wird. Die Datenstation 50 weist ebenso wie die Datenstation 10 eine Schnittstelle zum Anschalten eines Speichers 70 sowie eine Schnittstelle zum Anschalten an das Telekommunikationsnetz 40 auf.

Obwohl die Erfindung überall dort sinnvoll eingesetzt werden kann, wo unterschiedliche Systeme Daten in verschlüsselter Form austauschen sollen, wird die vorliegende Erfindung beispielhaft anhand der beiden Datenstationen 10 und 50 erläutert, die unterschiedlichen Systembetreibern gehören können. Es sei angenommen, daß die Datenstation 50 beispielsweise ein Kartentelefon von mehreren Kartentelefonen eines nationalen Systembetreibers sei, wohingegen die Datenstation 10 ein Zentralrechner eines fremden, ausländischen Kartenausgebers ist. Es sei weiter angenommen, daß der Kartenausgeber Telefonkarten verkauft hat, mit denen auch am Kartentelefon 50 des nationalen Systembetreibers telefoniert werden kann. Mit anderen Worten kann die Telefon-Chipkarte grenzüberschreitend eingesetzt werden. Die grenzüberschreitende Nutzung solcher Telefonkarten setzt allerdings voraus, daß zwischen dem ausländischen Kartenausgeber und dem nationalen Systembetreiber Buchungsdaten in integritätsgeschützter (d. h. die Buchungsdaten sind mit einer elektronischen Prüfsumme versehen) und verschlüsselter Form übertragen werden können. Darüber hinaus muß bei einer grenzüberschreitenden Nutzung von Telefonkarten sichergestellt sein, daß das Kartentelefon 50 des nationalen Systembetreibers manipulierte Telefonkarten nicht annehmen kann. Das Kartentelefon 50 muß daher in der Lage sein, die Telefonkarte des fremden Kartenausgebers auf ihre Echtheit oder Berechtigung hin zu überprüfen. Grundsätzlich ist das Kartentelefon 50 in der Lage, Karten des nationalen Systembetreibers auf Echtheit zu überprüfen. Diese Funktion übernimmt das Sicherheitsmodul 60, indem es beispielsweise einen eigenen kryptografischen Schlüssel benutzt, der dem Kartentelefon nicht bekannt werden darf. Systeme zur Authentifizierung von Kartenbenutzern sind allgemein bekannt und nicht Gegenstand der Erfindung. Soll nun beispielsweise die Telefonkarte des fremden Kartenausgebers an dem Kartentelefon 50 des nationalen Systembetreibers auf Echtheit überprüft werden, benötigt das Sicherheitsmodul 60 die entsprechende geheime Information des Zentralrechners 10 des fremden Kartenausgebers. Dabei muß gewährleistet sein, daß das Kartentelefon 50 nicht in den Besitz dieser geheimen Information des Zentralrechners 10 gelangen kann. Dies wird dadurch sichergestellt, daß eine sogenannte Trusted Party, das ist eine unabhängige Organisation, einen nur ihr bekannten kryptografischen Schlüssel erzeugt, der sowohl in den Kryptoadapter 20 als auch in das Sicherheitsmodul 60 geschrieben wird. Ganz wesentlich ist dabei, daß der kryptografische Schlüssel weder von dem Zentralrechner 10 aus dem Kryptoadapter 20 noch von dem Kartentelefon 50 aus dem eingesetzten Sicherheitsmodul 60 ausgelesen werden kann. Der von der Trusted Party erzeugte kryptografische Schlüssel ist und bleibt sowohl dem fremden Kartenausgeber als auch dem nationalen Systembetreiber unbekannt. Die geheime Information des Zentralrechners 10, die z.B. ein weiterer kryptografischer Schlüssel sein kann, mit dem die Zugangsberechtigung eines Kartenbenutzers sowohl an den Kartentelefonen des fremden Kartenausgebers als auch an dem Kartentelefon 50 des nationalen Systembetreibers überprüft werden kann, wird zunächst im Klartext oder transportverschlüsselt zum Kryptoadapter 20 übertragen. Der Kryptoadapter 20 chiffriert mit Hilfe des in ihm gespeicherten kryptografischen Schlüssels die geheime Information. Die chiffrierte geheime Information kann beispielsweise in einen Speicher 30 abgelegt werden. Bei dem Speicher 30 kann es sich beispielsweise um eine Diskette handeln, deren Inhalt in einem entsprechenden Speicherlaufwerk 70 in dem Kartentelefon 50 ausgelesen werden kann. Die in dem Kryptoadapter 20 chiffrierte geheime Information kann alternativ über das Telekommunikationsnetz 40 zum Kartentelefon 50 übertragen werden. Das Kartentelefon 50 muß derart konzipiert sein, daß die geheime chiffrierte Information des Zentralrechners 10 unmittelbar zum Sicherheitsmodul 60 übertragen wird. Das Kartentelefon 50 selbst ist nämlich nicht in der Lage, die chiffrierte geheime Information des Zentralrechners 10 zu entschlüsseln, da ihr der kryptografische Schlüssel nicht bekannt ist. Mit Hilfe des in dem Sicherheitsmodul 60 abgelegten kryptografischen Schlüssels, der dem kryptografischen Schlüssel des Kryptoadapters entspricht, kann die chiffrierte geheime Information wieder dechiffriert werden. Das Kartentelefon 50 kann mit Hilfe der dechiffrierten geheimen Information des Zentralrechners 10 auf eine an sich bekannte Weise auch eine grenzüberschreitend benutzte Telefonkarte auf ihre Berechtigung hin überprüfen.

Ein weiteres Problem bei einer grenzüberschreitenden Nutzung von Telefonkarten besteht in der gesicherten Abrechnung zwischen dem nationalen Systembetreiber des Kartentelefons 50 und dem fremden Kartenausgeber des Zentralrechners 10. Die mit der grenzüberschreitend benutzten Telefonkarte verursachten Kommunikationsentgelte stellt der nationale Systembetreiber dem fremden Kartenausgeber in Rechnung. Allerdings muß sich der fremde Kartenausgeber vergewissern können, daß die in Rechnung gestellten Entgelte auch tatsächlich von einer berechtigten, von ihm ausgegebenen Telefonkarte verursacht worden sind. Hierzu ist in dem Sicherheitsmodul 60 ein nicht rücksetzbarer Zähler (nicht gezeigt) vorgesehen, der die von den Telefonkarten des fremden Kartenausgebers verursachten Tarifeinheiten zählt. Dieser Zähler ist derart ausgebildet, daß er von dem nationalen Systembetreiber des Kartentelefons 50 nicht manipuliert werden kann. Der Zähler ist auf eine an sich bekannte Weise kryptografisch geschützt und sein Zählwert wird nur dann erhöht, wenn von der grenzüberschreitend benutzten Telefonkarte Werte abgebucht werden. Das Sicherheitsmodul 60 berechnet die abgebuchten Einheiten und erhöht gleichzeitig einen in ihm installierten Summenzähler. Damit der ausländische Kartenausgeber feststellen kann, daß die berechneten Einheiten ihm auch zu Recht in Rechnung gestellt worden sind, erzeugt das Sicherheitsmodul 60 mit einer weiteren geheimen Information, z. B. einem zur ersten Datenstation 10 gehörenden Ladeschlüssel oder mittels des kryptografischen Schlüssels eine elektronische Unterschrift, die zusammen mit dem Zählerstand zum Kartentelefon 50 übertragen wird. Dieser mit einer elektronischen Unterschrift versehene Zählwert wird dem Kartenausgeber zur Überprüfung übergeben.

Dank der Erfindung ist es möglich, eine geheime Information einer ersten Datenstation an eine zweite Datenstation zu übertragen, die allerdings die geheime Information der ersten Datenstation nicht in Erfahrung bringen kann. Dazu erzeugt eine sogenannte Trusted Party einen nur ihr bekannten kryptografischen Schlüssel, der in einer in der ersten Datenstation einsetzbaren Sicherheitseinrichtung abgelegt ist. Darüber hinaus wird der gleiche kryptografische Schlüssel in einem Sicherheitsmodul abgelegt, der in der zweiten Datenstation angeordnet ist. Das Sicherheitsmodul der zweiten Datenstation und die Sicherheitseinrichtung der ersten Datenstation sind derart ausgebildet, daß die darin gespeicherten kryptografischen Schlüssel nicht von den Datenstationen ausgelesen werden können.

## Patentansprüche

1. System mit wenigstens einer ersten und zweiten Datenstation (10,50), wobei wenigstens in der ersten Datenstation (10) eine oder mehrere geheime Informationen gespeichert sind,
**wobei** in die erste Datenstation (10) eine Sicherheitseinrichtung (20) einsetzbar ist, die einen kryptografischen Schlüssel enthält, der von keiner Datenstation auslesbar ist, und
in die zweite Datenstation (50) eine Sicherheitseinrichtung (60) einsetzbar ist, die den gleichen kryptografischen Schlüssel wie die Sicherheitseinrichtung (20) der ersten Datenstation (10) enthält, der ebenfalls von keiner Datenstation auslesbar ist, **dadurch gekennzeichnet, dass** die Sicherheitseinrichtung (20) der ersten Datenstation (10) mit Hilfe des gespeicherten kryptografischen Schlüssels wenigstens eine vorbestimmte geheime Information der in der ersten Datenstation (10) gespeicherten geheimen Informationen chiffriert und zur zweiten Datenstation (50) übermittelt, deren Sicherheiteinrichtung (60) mit Hilfe des gespeicherten kryptografischen Schlüssels die chiffrierte, vorbestimmte geheime Information der ersten Datenstation (10) dechiffriert, wobei die zweite Datenstation (50) die dechiffrierte geheime Information der ersten Datenstation (10) nicht aus der Sicherheitseinrichtung (60) auslesen kann.

2. System nach Anspruch 1, **dadurch gekennzeichnet, dass** die Sicherheitseinrichtung (20) der ersten Datenstation (10) weitere geheime Informationen mit der vorbestimmten geheimen Information verschlüsselt und diese Informationen zur zweiten Datenstation (50) übermittelt, deren Sicherheitseinrichtung (60) die chiffrierten, weiteren geheimen Informationen entschlüsselt.

3. System nach einem der Ansprüche 1 oder 2, **dadurch gekennzeichnet, dass** die Sicherheitseinrichtung eine Chipkarte oder ein Sicherheitsmodul ist.

4. System nach einem der Ansprüche 1 bis 3, **dadurch gekennzeichnet, dass** jede Datenstation (10,50) eine Schnittstelle zum Anschalten eines Speichers (30,70) und eine Schnittstelle zum Anschalten an ein Telekommunikationsnetz (40) aufweist.

5. System nach einem der Ansprüche 1 bis 4, **dadurch gekennzeichnet, dass** die erste Datenstation (10) ihre geheimen Informationen transportverschlüsselt zu der in ihr eingesetzten Sicherheitseinrichtung (20) überträgt.

## Claims

1. System with at least a first and a second data station (10, 50), wherein one or more items of secret information are stored at least in the first data station (10), wherein a security device (20) that contains a cryptographic key that cannot be read out by any data station can be used in the first data station (10), and a security device (60) that contains the same cryptographic key as the security device (20) of the first data station (10), and that likewise cannot be read out by any data station, can be used in the second data station (50), **characterized in that** the security device (20) of the first data station (10), using the stored cryptographic key, encrypts at least one predetermined secret information item of the secret information stored in the first data station (10) and transmits it to the second data station (50), whose security device (60) decrypts the encrypted, predetermined secret information item from the first data station (10) using the stored cryptographic key, wherein the second data station (50) cannot read out of the security device (60) the decrypted secret information from the first data station (10).

2. System according to claim 1, **characterized in that** the security device (20) of the first data station (10) encrypts additional information with the predetermined secret information and transmits these items of information to the second data station (50), whose security device (60) decrypts the encrypted additional secret information.

3. System according to any one of claims 1 or 2, **characterized in that** the security device is a chip card or a security module.

4. System according to any one of claims 1 through 3, **characterized in that** each data station (10, 50) has an interface for connecting to a memory (30, 70) and an interface for connecting to a telecommunications network (40).

5. System according to any one of claims 1 through 4, **characterized in that** the first data station (10) transmits its secret information in transport-encrypted form to the security device (20) used therein.

## Revendications

1. Système comportant au moins une première et une deuxième station de données (10, 50), une ou plusieurs informations secrètes étant enregistrées au moins dans la première station de données (10),
un équipement de sécurisation (20) contenant une clé cryptographiques qui n'est récupérable par aucune station de données, pouvant être inséré dans la première station de données (10), et
un équipement de sécurisation (60) contenant la même clé cryptographique que celle de l'équipement de sécurisation (20) de la première station de données (10) qui n'est pas récupérable non plus par aucune station de données, pouvant être inséré dans la deuxième station de données (50), **caractérisé en ce que** l'équipement de sécurisation (20) de la première station de données (10) chiffre, à l'aide de la clé cryptographique enregistrée, au moins une information secrète prédéterminée des informations secrètes enregistrées dans la première station de données (10) et la transmet à la deuxième station de données (50) dont l'équipement de sécurisation (60) déchiffre, à l'aide de la clé cryptographique enregistrée, l'information secrète prédéterminée chiffrée de la première station de données (10), la deuxième station de données (50) n'ayant pas la faculté de récupérer de l'équipement de sécurisation (60) l'information secrète déchiffrée de la première station de données (10).

2. Système selon la revendication 1, **caractérisé en ce que** l'équipement de sécurisation (20) de la première station de données (10) chiffre d'autres informations secrètes ensemble avec l'information secrète prédéterminée et transmet ces informations à la deuxième station de données (50) dont l'équipement de sécurisation (60) déchiffre les autres informations secrètes chiffrées.

3. Système selon l'une des revendications 1 ou 2, **caractérisé en ce que** l'équipement de sécurisation est une carte à puce ou un module de sécurisation.

4. Système selon l'une des revendications 1 à 3, **caractérisé en ce que** chaque station de données (10, 50) comporte une interface pour la connexion d'une mémoire (30, 70) et une interface pour la connexion à un réseau de télécommunications (40).

5. Système selon l'une des revendications 1 à 4, **caractérisé en ce que** la première station de données (10) utilise un code de transfert pour transmettre ses informations secrètes à l'équipement de sécurisation (20) qui y est inséré.
